**Europäisches Patentamt**

**European Patent Office**

**Office européen des brevets**

(19)

(11) Veröffentlichungsnummer: **0 241 411 B1**

(12) # EUROPÄISCHE PATENTSCHRIFT

(45) Veröffentlichungstag der Patentschrift: 06.03.91

(51) Int. Cl.5: **B60B 39/00**

(21) Anmeldenummer: **87730033.5**

(22) Anmeldetag: **03.04.87**

(54) Gleitschutzvorrichtung.

(30) Priorität: **05.04.86 DE 3611836**

(43) Veröffentlichungstag der Anmeldung:
**14.10.87 Patentblatt 87/42**

(45) Bekanntmachung des Hinweises auf die
Patenterteilung:
**06.03.91 Patentblatt 91/10**

(84) Benannte Vertragsstaaten:
**AT CH DE FR LI SE**

(56) Entgegenhaltungen:
**GB-A- 23 817**
**US-A- 1 403 270**
**US-A- 2 264 466**
**US-A- 2 442 322**
**US-A- 2 815 828**

(73) Patentinhaber: **RUD-Kettenfabrik Rieger &
Dietz GmbH u. Co.
Friedensinsel
W-7080 Aalen 1(DE)**

(72) Erfinder: **Biehler, Wolfgang
Kernerstrasse 8
W-7080 Aalen(DE)**

(74) Vertreter: **Böning, Manfred, Dr. Ing. et al
Patentanwälte Dipl.-Ing. Dieter Jander Dr.
Ing. Manfred Böning Leistikowstrasse 2
W-1000 Berlin 19(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Gleitschutzvorrichtung für Kraftfahrzeuge mit mehreren, von einem in eine Drehbewegung versetzbaren Halter gehaltenen Kettensträngen, deren dem Halter abgewandte Enden bei in der Betriebsstellung umlaufendem Halter unter Fliehkrafteinwirkung vom Halter weg in den Bereich der Bodenberührungsfläche eines sich drehenden Fahrzeugreifens geschleudert werden, mit einem am Fahrzeug gelagerten Träger für den Halter und mit einem zum Verlagern des Trägers dienenden Antriebsaggregat, das an einer halterfernen Stelle am Fahrzeug befestigt ist und über flexible Kraftübertragungsmittel mit dem Träger in Verbindung steht.

Aus der EU-OS 0 162 823 ist eine Vorrichtung der vorstehenden Art bekannt, bei der zum Einleiten von Schwenkbewegungen in den von einem Schwenkarm gebildeten Träger des Halters zwei Bowdenzüge dienen, die an eine Rolle angreifen, welche drehfest mit der Achse des Schwenkarmes verbunden ist. Die Bowdenzüge sind dabei so angeordnet, daß durch einen von ihnen eine durch ein Druckluftaggregat eingeleitete Schwenkung des Schwenkarmes in eine Richtung und durch den anderen eine durch eine Rückholfeder betätigte Schwenkung des Schwenkarmes in die Gegenrichtung bewirkt werden kann. Die bekannte Anordnung vermag insofern nicht voll zu befriedigen, als pro Gleitschutzvorrichtung zwei lediglich auf Zug beanspruchbare Bowdenzüge erforderlich sind und die Rolle zusätzlichen, vielfach fehlenden Raum beansprucht, bzw. ihren Abmessungen aus Platzgründen enge Grenzen gesetzt sind, d.h. die Hebelarme, an denen die Bowdenzüge angreifen, mithin nur klein sein können. Letzteres bedeutet, daß vergleichsweise große Betätigungskräfte für den Schwenkarm aufgebracht werden müssen, zumal beim Überführen des Halters in die Arbeitsstellung auch die Kraft der Rückholfeder überwunden werden muß. Hinzu kommt, daß der zur Realisierung der bekannten Anordnung notwendige Aufwand verhältnismäßig groß ist.

Aus der DE-OS 29 14 366 ist außerdem eine Gleitschutzvorrichtung ähnlicher Bauart bekannt, bei der die Kolbenstange eines zusammen mit einem Schwenkarm für den Halter an der Fahrzeugachse montierten Druckluftaggregates im Abstand von der Schwenkachse des Schwenkarmes an diesen angreift. Diese Lösung ist mit dem Nachteil verbunden, daß die Anbringung des Druckluftaggregates an der Fahrzeugachse einerseits wiederum Platzprobleme mit sich bringt und andererseits die ungefederte Masse der Fahrzeugachse erhöht. Als schwierig erweist sich darüber hinaus die Lagerung des Druckluftaggregates, die im Hinblick auf die Verwendung einer starren Kolbenstange Bewegungen des Druckluftzylinders zulassen muß.

Schließlich ist aus der US-PS 28 65 471 eine Gleitschutzvorrichtung bekannt, bei der ein Schwenkarm durch eine Feder in seine Betriebsstellung gedrückt wird und mittels eines Seilzuges gegen die Wirkung der Feder aus der Betriebsstellung entfernbar ist. Eine derartige Lösung setzt zur Verwirklichung hinreichend großer Andrückkräfte des vom Fahrzeugrad anzutreibenden Halters an das Fahrzeugrad die Verwendung einer starken Feder voraus, die einerseits viel Platz beansprucht und deren Kraft andererseits beim Überführen des Halters in seine unwirksame Lage mittels des Seilzuges überwunden werden muß.

Der Erfindung liegt die Aufgabe zugrunde, eine Gleitschutzvorrichtung der in Betracht gezogenen Gattung einerseits übersichtlicher und einfacher und andererseits so zu gestalten, daß sie auch bei Fahrzeugen unterschiedlicher Bauart trotz engster Raumverhältnisse, wie man ihnen insbesondere bei luftgefederten Fahrzeugen begegnet, problemlos untergebracht werden kann. Diese Aufgabe wird erfindungsgemäß dadurch gelöst, daß zur Kraftübertragung ein Druck-Zug-Kabel dient.

Die erfindungsgemäße Gleitschutzvorrichtung bietet den Vorteil, daß durch ein- und dasselbe Kraftübertragungsmittel eine Bewegung des Trägers in gegenläufige Richtungen möglich ist. Der Kraftangriff erfolgt dabei zweckmäßigerweise so, daß der Halter durch das Druck-Zug-Kabel in seine Betriebsstellung gedrückt wird. Das Druck-Zug-Kabel übernimmt bei der erfindungsgemäßen Gleitschutzvorrichtung mit anderen Worten die Funktion eines die Bewegungen des Trägers bzw. Halters steuernden Muskels. Es ist bei Bedarf leicht austauschbar und ermöglicht eine kompakte Bauweise der im räumlich beengten Bereich zwischen Fahrzeugachse und Fahrzeugreifen angeordneten Betätigungsorgane für die Gleitschutzvorrichtung. Eine Rückholfeder ist ebenso entbehrlich wie ein zweites Betätigungsorgan. Der zur Steuerung erforderliche Kraftaufwand ist gering, und die Betätigungswege können vergleichsweise lang sein. Das Druck-Zug-Kabel erweist sich mit anderen Worten als ein Mittel, mit dem lange als kaum überwindbar erachtete Probleme auf überraschend einfache Weise überzeugend gelöst werden können.

Die Erfindung wird im folgenden anhand der beigefügten Zeichnung näher erläutert. Es zeigen:

Fig. 1 die Rückansicht eines mit zwei Gleitschutzvorrichtungen ausgestatteten Lastkraftwagens;

Fig. 2 im vergrößerten Maßstab eine Einzelheit der Gleitschutzvorrichtungen gemäß Fig. 1 und

Fig. 3 bis 7 Modifikationen der in den Fig. 1 und 2 dargestellten Gleitschutzvorrichtung, die die Vielfalt der Einsatzmöglichkeiten eines Druck-Zug-Kabels verdeutlichen.

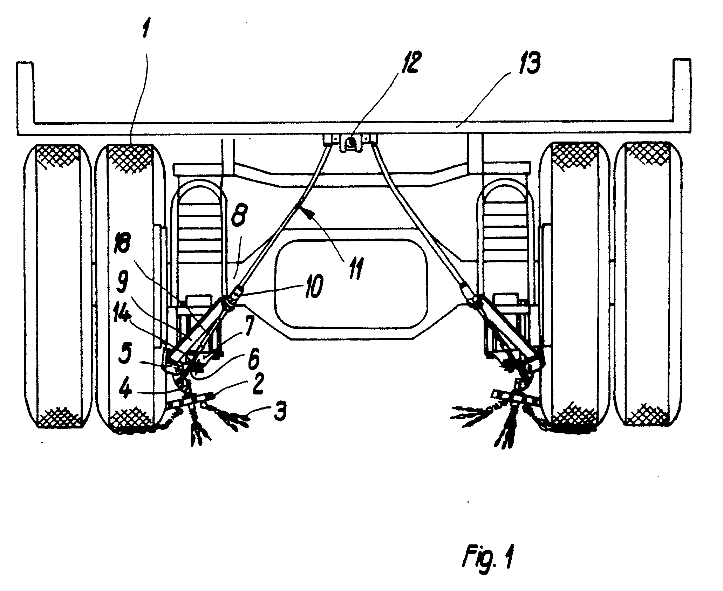

Fig. 1 zeigt das hintere Ende eines Lastkraftwagens, welcher mit zwei Gleitschutzvorrichtungen ausgestattet ist, die sich in der Fig. 1 in ihrer Betriebsstellung befinden.

Die Gleitschutzvorrichtungen haben beide den gleichen Aufbau. Jede Gleitschutzvorrichtung besteht aus einem gegen die Flanke eines Fahrzeugreifens 1 drückbaren Halter 2, über dessen Umfang Gleitschutzmittel bildende Kettenstränge 3 angeordnet sind, wobei zur Erhöhung der Gleitschutzwirkung jeweils mehrere Kettenstränge zu Gruppen zusammengefaßt sind. Infolge des Kontaktes zwischen dem Halter 2 und dem Fahrzeugreifen wird der Halter 2 in eine drehende Bewegung versetzt, und die Kettenstränge 3 werden unter Fliehkrafteinwirkung in den Bereich der Bodenberührungsfläche des Fahrzeugreifens 1 geschleudert. Um den Halter 2 aus seiner Ruhestellung in die dargestellte Betriebsstellung überführen zu können, ist er an einem von einem Schwenkarm gebildeten Träger 4 gelagert, und zwar in einem Lager 5, das über eine aus zwei zueinander verstellbaren Teilen 6 und 7 bestehende Halterung mit der Achse 8 des Fahrzeuges verbunden ist. Am Lager 5 ist außerdem ein Ausleger 9 angeordnet, der zur Befestigung einer Befestigungshülse 10 eines Druck-Zug-Kabels dient. Das Druck-Zug-Kabel wird durch ein Antriebsaggregat 12 betätigt, welches am Fahrgestell 13 des Fahrzeuges gelagert ist.

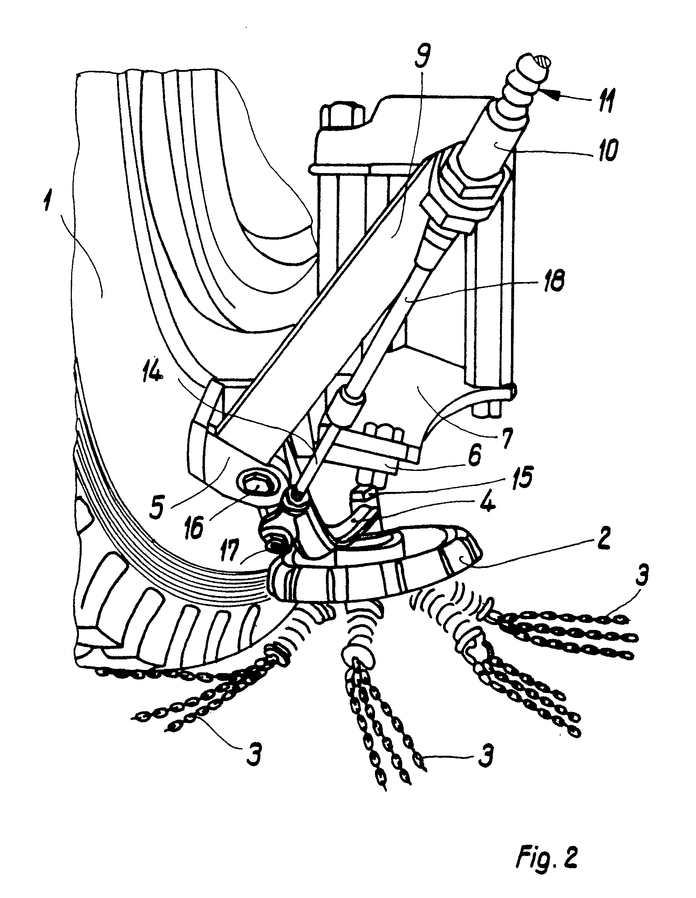

Wie am besten aus Fig. 2 erkennbar ist, greift die Druck-Zug-Stange 14 des Druck-Zug-Kabels 11 zwischen der Drehachse 15 des Halters 2 und der Schwenkachse 16 des Trägers 4 an einem Antriebszapfen 17 des Trägers 4 an. Die Auskraglänge der Druck-Zug-Stange 14 gegenüber der Führungshülse 18 des Druck-Zug-Kabels läßt sich variieren und mithin den jeweiligen Gegebenheiten anpassen.

Wie die Figuren zeigen, ist der Raum, den die reifennahen Teile der beschriebenen Gleitschutzvorrichtung beanspruchen, vergleichsweise gering, da das Antriebsaggregat 12 für die Druck-Zug-Stange 14 an einer halterfernen Stelle am Fahrgestell 13 angeordnet ist. Das Druck-Zug-Kabel 11 läßt sich ohne Schwierigkeiten an den Träger 4 heranführen und dies unabhängig von den jeweiligen baulichen Gegebenheiten, die sich bei verschiedenen Fahrzeugen erheblich voneinander unterscheiden können, sich aber regelmäßig durch größte räumliche Enge auszeichnen. Da die Druck-Zug-Stange 14 Hin- und Herbewegungen ausführen kann, benötigt man zur Betätigung des Trägers 4 einer Gleitschutzvorrichtung jeweils nur ein einziges Kraftübertragungsmittel, das die Bewegungen des Halters 2 zwangsläufig in beide Richtungen steuert.

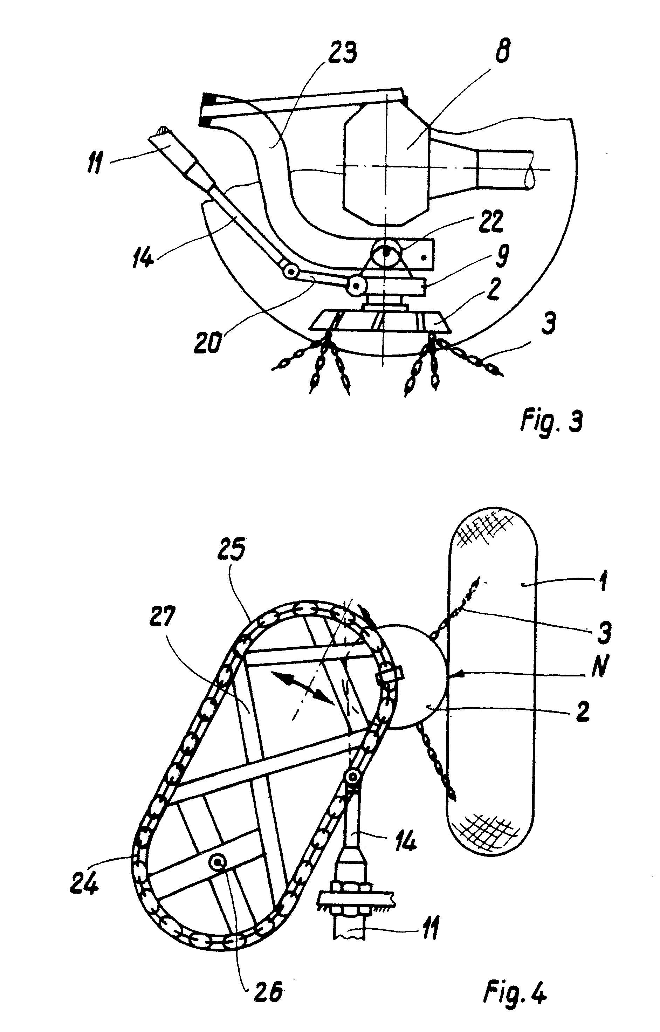

In Fig. 3 ist ein Ausführungsbeispiel dargestellt, bei dem ein Träger 19 über ein Zwischenglied 20 mit dem Ende der Druck-Zug-Stange 14 eines Druck-Zug-Kabels 11 verbunden ist. Der Träger 19 ist mittels eines von einer Rolle gebildeten Führungsgliedes 22 in einer Führung 23 zwangsgeführt, deren Form den jeweiligen räumlichen Gegebenheiten angepaßt werden kann.

Bei dem Ausführungsbeispiel gemäß Fig. 4 findet als Führungsglied 24 und Träger für den Halter 2 ein Kettenstrang Verwendung, der in einer ein geschlossenes Oval bildenden Führung 25 geführt ist, welche in ihrer Gesamtheit schwenkbar auf einer Achse 26 gelagert ist. Gehalten wird die Führung 25 durch Rohrverstrebungen 27. Die Druck-Zug-Stange 14 des Druck-Zug-Kabels 11 ist in diesem Fall mit einem Glied des Kettenstranges verbunden. Als Kettenstränge lassen sich sowohl Rundgliederketten als auch Laschenketten als auch Kugelketten verwenden.

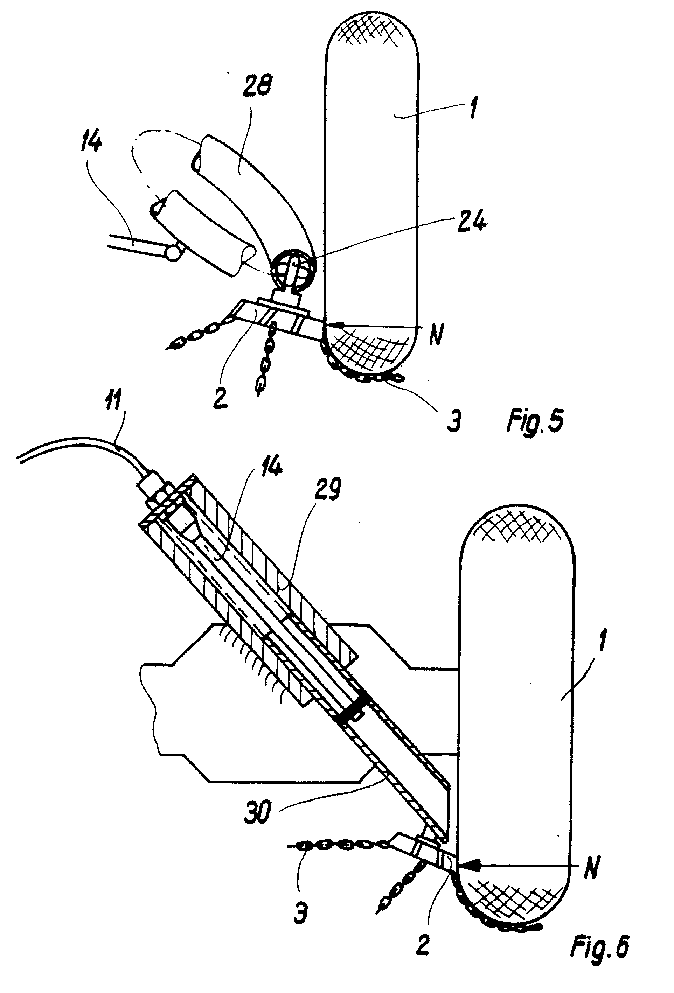

Eine leicht modifizierte Ausführungsform einer Anordnung gemäß Fig. 4 ist in Fig. 5 angedeutet. Hier wird als Führung 28 ein geschlitztes Rohr verwendet, das so geformt ist, daß der Halter 2 am Ende seiner Bewegungsbahn gewissermaßen zwischen Führung 28 und Fahrzeugreifen 1 eingekeilt wird.

Fig. 6 zeigt eine Lösung, bei der die Druck-Zug-Stange 14 des flexiblen Druck-Zug-Kabels 11 auf ein in einer von einem Zylinder gebildeten Führung 29 geführten kolbenartigen Führungsglied 30 für den Halter 2 einwirkt. Die zwischen dem Fahrzeugreifen und dem Halter 2 wirksamen Normalkräfte N werden hier folglich durch die Führung 29 des gleichzeitig den Träger für den Halter 2 bildenden Führungsgliedes 30 aufgefangen.

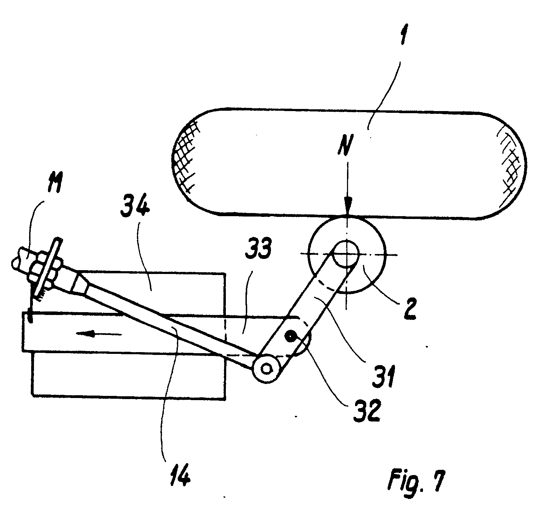

Ein weiteres Ausführungsbeispiel ist schließlich in Fig. 7 dargestellt. Der gegen den Fahrzeugreifen 1 gedrückte Halter 2 ist hier an einem von einem zweiarmigen Hebel gebildeten Träger 31 befestigt, der seinerseits auf einer Achse 32 schwenkbar an einem Fürhungsglied 33 gelagert ist, das in einer Führung 34 geführt ist. Die Druck-Zug-Stange 14 des Druck-Zug-Kabels 11 bewegt auch hier sowohl den Träger 31 als auch das Führungsglied 33.

## Ansprüche

1. Gleitschutzvorrichtung für Kraftfahrzeuge mit mehreren, von einem in eine Drehbewegung versetzbaren Halter (2) gehaltenen Kettensträngen (3), deren dem Halter (2) abgewandte Enden bei in der Betriebsstellung umlaufendem Halter (2) unter Fliehkrafteinwirkung vom Halter (2) weg in den Bereich der Bodenberührungsfläche eines sich drehenden Fahrzeugreifens (1) geschleudert werden, mit einem am Fahrzeug gelagerten Träger (4) für den Halter (2) und mit einem zum Verlagern des Trägers (4) dienenden Antriebsaggregat (12), das an einer halterfernen Stelle am Fahrzeug befestigt ist und über flexible Kraftübertragungsmittel mit dem Träger (4) in Verbindung steht, dadurch gekennzeichnet, daß zur Kraftübertragung ein Druck-Zug-Kabel (11) dient.

2. Vorrichtung nach Anspruch 1, dadurch gekennzeichnet, daß dem Halter (2) mindestens ein in einer Führung (23, 25,29;34) zwangsgeführtes, durch das Druck-Zug-Kabel (11) betätigbares Führungsglied (22,24,30,33) zugeordnet ist.

3. Vorrichtung nach Anspruch 2, dadurch gekennzeichnet, daß das Führungsglied (24,30) zwischen dem Halter (2) und dem Druck-Zug-Kabel (11) angeordnet ist.

4. Vorrichtung nach Anspruch 2 oder 3, dadurch gekennzeichnet, daß das Druck-Zug-Kabel (11) über ein von einer Kette gebildetes Führungsglied (24) mit dem Halter (2) in Verbindung steht.

5. Vorrichtung nach einem der Ansprüche 2 bis 4, dadurch gekennzeichnet, daß die Führung (23,25,29,34) zur Aufnahme mindestens eines Teiles der zwischen dem Halter (2) und dem Fahrzeugreifen (1) wirksamen Normalkräfte (N) dient.

6. Vorrichtung nach einem der Ansprüche 1 bis 5, dadurch gekennzeichnet, daß der Träger (4) für den Halter (2) von einem Schwenkarm gebildet wird.

7. Vorrichtung nach Anspruch 6, dadurch gekennzeichnet, daß das Druck-Zug-Kabel (11) über eine Druck-Zug-Stange (14) zwischen der Drehachse (15) des Halters (2) und der Schwenkachse (16) des Trägers (4) an letzterem angreift und der Halter (2) durch die Druck-Zug-Stange (4) in seine Betriebsstellung drückbar ist.

8. Vorrichtung nach Anspruch 6 oder 7, dadurch gekennzeichnet, daß am Lager (5) für den Träger (4) ein Ausleger (9) zur Befestigung einer Befestigungshülse (10) des Druck-Zug-Kabels (11) angeordnet ist.

9. Vorrichtung nach einem der Ansprüche 1 bis 8, dadurch gekennzeichnet, daß das Druck-Zug-Kabel (11) - in Fahrtrichtung des Fahrzeuges betrachtet - vor der den Träger (4) tragenden Fahrzeugachse (8) angeordnet ist.

10. Vorrichtung nach Anspruch 9, dadurch gekennzeichnet, daß das Antriebsaggregat (12) für das Druck-Zug-Kabel (11) oberhalb einer durch die Achsen (8) des Fahrzeuges verlaufenden Ebene angeordnet ist.

11. Vorrichtung nach einem der Ansprüche 1 bis 10, dadurch gekennzeichnet, daß einem Antriebsaggregat (12) zwei Druck-Zug-Kabel (11) für zwei Gleitschutzvorrichtungen zugeordnet sind.

## Claims

1. Anti-skid device for motor vehicles having a plurality of chain strands (3) which are held by a holder (2) to which a rotary motion can be imparted and whose ends turned away from the holder (2) are, under the action of centrifugal force, thrown away from the holder (2) into the region of the ground contact surface of a rotating vehicle wheel (1) when, in the operating position, the holder (2) is revolving, having a carrier (4) for the holder (2), which carrier is mounted swivellably on a mounting (6,7) connected to the axle (8) of the vehicle wheel, and having a drive unit (12) which serves for the displacement of the carrier (4), is secured at a point remote from the holder to the chassis of the vehicle and is connected to the carrier (4) via flexible power transmission means, characterized in that a push-pull cable (11) is used for power transmission.

2. Device according to Claim 1, characterized in that at least one guide member (22,24,30,33) positively guided in a guide (23,25,29;34) and actuable by the push-pull cable (11) is allocated to the holder (2).

3. Device according to Claim 2, characterized in that the guide member (24,30) is arranged between the holder (2) and the push-pull cable (11).

4. Device according to Claim 2 or 3, characterized in that the push-pull cable (11) is connected to the holder (2) via a guide member (24) formed by a chain.

5. Device according to one of Claims 2 to 4, characterized in that the guide (23,25,29,34) serves to absorb at least part of the normal forces (N) operative between the holder (2) and the vehicle wheel (1).

6. Device according to one of Claims 1 to 5, characterized in that the carrier (4) for the holder (2) is formed by a swivel arm.

7. Device according to Claim 6, characterized in that the push-pull cable (11) engages via a push-pull rod (14) on the carrier (4) between the axis of rotation (15) of the holder (2) and the swivelling axis (16) of the carrier (4), and the holder (2) can be pressed into its operating position by the push-pull rod (14).

8. Device according to Claim 6 or 7, characterized in that an arm (9) is arranged on the bearing (5) for the carrier (4) for the purpose of fixing a fixing sleeve (10) of the push-pull cable (11).

9. Device according to one of Claims 1 to 8, characterized in that - as seen in the driving direction of the vehicle - the push-pull cable (11) is arranged in front of the vehicle axle (8) supporting the carrier (4).

10. Device according to Claim 9, characterized in that the drive unit (12) for the push-pull cable (11) is arranged above a plane extending through the axles (8) of the vehicle.

11. Device according to one of Claims 1 to 10, characterized in that two push-pull cables (11) for two anti-skid devices are allocated to one drive unit (12).

**Revendications**

1. Dispositif antidérapage pour des véhicules automobiles, avec plusieurs tronçons de chaînes (3) qui sont aintenus par un support (2) pouvant être mis en rotation, et dont les extrémités éloignées du support (2) sont, lorsque le support (2) tourne en position de service, et sous l'action de la force centrifuge, projetées en éloignement du support (2) dans la région de la face de contact au sol d'un pneumatique de véhicule (1) rotatif, avec un élément porteur (4) pour le support (2) qui est monté pivotant sur un moyen de fixation (6, 7) assemblé à l'essieu (8) du véhicule, et avec une unité d'entraînement (12) pour déplacer cet élément porteur (4) qui est fixée en un point éloigné du support sur le châssis du véhicule et qui est reliée à l'élément porteur (4) par l'intermédiaire d'un moyen flexible de transmission de force, **caractérisé** en ce qu'on utilise pour la transmission de force un câble de poussée et de traction (11).

2. Dispositif selon la revendication 1, caractérisé en ce qu'au support (2) est associé au moins un élément de guidage (22, 24, 30, 33) qui est guidé de manière forcée dans un guide (23, 25, 29, 34) et qui peut être actionné par le câble de poussée et de traction (11).

3. Dispositif selon la revendication 2, caractérisé en ce que l'élément de guidage (24, 30) est disposé entre le support (2) et le câble de poussée et de traction (11).

4. Dispositif selon la revendication 2 ou 3, caractérisé en ce que le câble de poussée et de traction (11) est relié au support (2) par l'intermédiaire d'un élément de guidage (24) constitué par une chaîne.

5. Dispositif selon l'une des revendications 2 à 4, caractérisé en ce que le guide (23, 25, 29, 34) sert à recevoir au moins une partie des forces normales (N) agissant entre le support (2) et le pneumatique (1) du véhicule.

6. Dispositif selon l'une dés revendications 1 à 5, caractérisé en ce que l'élément porteur (4) pour le support (2) est constitué par un bras pivotant.

7. Dispositif selon la revendication 6, caractérisé en ce que le câble de poussée et de traction (11) agit sur l'élément porteur (4) par l'intermédiaire d'une tige de poussée et de traction (14) entre l'axe de rotation (15) du support (2) et l'axe de pivotement (16) de l'élément porteur (4), le support (2) pouvant être pounsé à sa position de service par la tige de poussée et de traction (14).

8. Dispositif selon la revendication 6 ou 7, caractérisé en ce qu'un bras (9), destiné à fixer une douille de fixation (10) du câble de poussée et de traction (11), est disposé sur le palier (5) pour l'élément porteur (4).

9. Dispositif selon l'une des revendications 1 à 8, caractérisé en ce que le câble de poussée et de traction (11) est disposé, vu dans le sens de marche du véhicule, avant l'essieu (8) du véhicule qui porte l'élément porteur (4).

10. Dispositif selon la revendication 9, caractérisé en ce que l'unité d'entraînement (12) pour le câble de poussée et de traction (11) est disposée au-dessus d'un plan passant par les essieux (8) du véhicule.

11. Dispositif selon l'une des revendications 1 à 10, caractérisé en ce que deux câbles de poussée et de traction (11), pour deux dispositifs antidérapages, sont associés à une unité d'entraînement (12).

Fig. 1

*Fig. 2*

Fig. 3

Fig. 4

Fig. 5

Fig. 6

Fig. 7